Europäisches Patentamt

European Patent Office

Office européen des brevets

(19)

(11) Veröffentlichungsnummer: **0 228 572**
**B1**

# EUROPÄISCHE PATENTSCHRIFT

(45) Veröffentlichungstag der Patentschrift:
31.01.90

(21) Anmeldenummer: 86116464.8

(22) Anmeldetag: 27.11.86

(51) Int. Cl.⁴: **C12G 3/08**

(54) Verfahren zum Herstellen von alkoholreduzierten bzw. alkoholfreien durch natürliche Vergärung erzeugten Getränken.

(30) Priorität: 04.12.85 DE 3542757

(43) Veröffentlichungstag der Anmeldung:
15.07.87 Patentblatt 87/29

(45) Bekanntmachung des Hinweises auf die Patenterteilung:
31.01.90 Patentblatt 90/5

(84) Benannte Vertragsstaaten:
AT CH DE ES FR IT LI

(56) Entgegenhaltungen:
EP-A- 0 058 634
AU-B- 489 834
DE-C- 377 406
FR-A- 541 873
FR-A- 1 176 894
FR-A- 2 505 868

(73) Patentinhaber: Peter Eckes KG mit beschränkter Haftung, Ludwig-Eckes-Allee 5, D-6501 Nieder-Olm(DE)

(72) Erfinder: Wiesenberger, Alfred, Haldeweg 29, D-6200 Wiesbaden(DE)
Erfinder: Marr, Rolf, Prof. Dr.-Ing., Neue-Welt-Höhe 33, A-8010 Graz(AT)
Erfinder: Kolb, Erich, Dr., Wilhelm-Holzamer-Weg 68, D-6501 Nieder-Olm(DE)
Erfinder: Weisrock, Reinhard, Weinbergstrasse 12, D-6501 Nieder-Olm(DE)
Erfinder: Schildmann, Jens A., Heerstrasse 38, D-6501 Partenheim(DE)

(74) Vertreter: Görtz, Dr. Fuchs, Dr. Luderschmidt Patentanwälte,
Abraham-Lincoln-Strasse 7 Postfach 46 60, D-6200 Wiesbaden(DE)

## Beschreibung

Die Erfindung betrifft ein Verfahren zum Herstellen von alkoholreduzierten oder alkoholfreien Getränken aus durch natürliche alkoholische Vergärung von Früchten oder entsprechenden Pflanzenteilen erhaltenen Ausgangsgetränken, insbesondere zur Herstellung von alkoholreduziertem oder alkoholfreiem Wein, bei dem durch Hochdruckextraktion mit einem inerten Gas, insbesondere durch $CO_2$-Hochdruckextraktion dem Ausgangsgetränk ein an Aromastoffen reicher alkoholischer Extrakt entzogen, das Restgetränk in seinem Ethanolgehalt reduziert und danach der an Aromastoffen reiche alkoholische Extrakt dem alkoholreduzierten Restgetränk wieder zugegeben wird.

Wenn in diesem Zusammenhang von durch natürliche alkoholische Vergärung erhaltenen Ausgangsgetränken gesprochen wird, so sollen hierunter in erster Linie alkoholische Getränke wie Wein, Dessertwein, Fruchtwein, Apfelwein oder dergl. verstanden werden. Man mag auch beispielsweise Bier noch zu diesen Getränken rechnen, das hier beschriebene Verfahren entfaltet seine besonderen Vorteile aber in Verbindung mit weinartigen Getränken, da die Erhaltung des im Ausgangsgetränk erhaltenen Buketts bei diesen Getränken besonders kritisch ist.

Es besteht ein allgemeines Bedürfnis, Weingetränke mit reduziertem Alkoholgehalt oder sogar alkoholfreie Weingetränke zur Verfügung zu haben, damit diejenigen, die - sei es aus gesundheitlichen Gründen oder aus Gründen der Beachtung der Fahrtüchtigkeit beim Führen von Kraftfahrzeugen - sich in der Einnahme alkoholischer Getränke zurückhalten müssen, auf den Genuß von Getränken mit dem gewünschten Geschmackscharakter nicht zu verzichten brauchen. Unter dem Begriff eines alkoholfreien Getränkes wird nach gesetzlicher Regelung ein Getränk verstanden, das weniger als 0,5 Vol.-% Ethanol enthält. Mit dem vorliegend beschriebenen Verfahren wird die Erzeugung von Getränken angestrebt, die diese Bedingung erfüllen, eventuell sogar in ihrem Ethanolgehalt noch merklich tiefer liegen. Dabei kommt es bei einem qualitativ hochwertigen Erzeugnis darauf an, daß die im Ausgangsgetränk enthaltenen Geschmacks- und Aromastoffe auch nach der Entalkoholisierung praktisch vollständig erhalten bleiben. Dieses Ziel ist um so schwieriger zu erreichen, um so weiter der Entalkoholisierungsgrad getrieben wird.

In der Literatur, insbesondere der Schutzrechtsliteratur ist bereits eine Vielzahl von Verfahren zur Reduzierung des Alkoholgehaltes von Getränken beschrieben. Die Verfahren bedienen sich im wesentlichen der Destillation, der Extraktion oder der Membrantrennung. Dabei gestaltet sich im allgemeinen eine lediglich gewisse Reduzierung des Alkoholgehaltes als problemlos, da die gegebene Selektivität bei der nicht vollständigen Abtrennung des Ethanols ausreicht, einen maßgeblichen Anteil der nahe dem Ethanol siedenden Aroma- und Geschmacksstoffe im Getränk zu belassen. Wie bereits erwähnt, werden die diesbezüglichen Probleme jedoch um so größer, je vollständiger die Ethanolentfernung durchgeführt werden soll. Es sind deshalb auch schon verschiedenste Verfahren beschrieben, die zuerst zusammen mit dem Ethanol abgetrennten Aroma- und Geschmacksstoffe aus der Ethanolfraktion wieder zu isolieren, um sie dem Ausgangsgetränk wieder zuzugeben, oder diese Aromastoffe vor der Ethanolreduzierung dem Getränk vorübergehend zu entziehen, um sie ebenfalls anschließend wieder beizumischen.

Aus der FR-OS 2 505 868 und der EP-PS 0 077 745 wie auch früheren Druckschriften ist es bereits bekannt, durch natürliche alkoholische Gärung erzeugten Getränken wie Wein Aromastoffe wie auch Ethanol durch eine Hochdruckextraktion mit Kohlendioxid zu entziehen. Die beiden genannten Druckschriften unterscheiden sich im wesentlichen nur darin, daß im einen Fall mit flüssigem Kohlendioxid und im anderen Fall mit Kohlendioxid im überkritischen Zustand gearbeitet wird. Beide Druckschriften beschreiben im einzelnen aber auch schon ein Verfahren der eingangs genannten Art, von dem der Patentanspruch 1 im Oberbegriff ausgeht. Beiden Druckschriften ist nämlich zumindest eine Verfahrensvariante zu entnehmen, bei der mittels einer ersten Hochdruckextraktion mit einem geeigneten Gas dem Getränk ein die wesentlichen Aromastoffe enthaltender Extrakt entzogen werden soll, der nach der Alkoholreduzierung des Restgetränkes diesem wieder zugesetzt wird. Die Alkoholreduzierung erfolgt nach den vorbeschriebenen Verfahren dann durch eine zweite Extraktion mittels des gleichen Gases.

Diese Hochdruckextraktion mittels Kohlendioxid ist zwar ein genügend schonendes Verfahren, welches den Wein und die aus ihm extrahierten Stoffe im allgemeinen nicht schädigt, ist aber bei einem hohen Grad angestrebter Entalkoholisierung nicht genügend selektiv.

Bekanntlich handelt es sich bei den das Bukett bildenden und weiteren Geschmacks- und Aromastoffen eines Weingetränkes um etwa 400 bis 600 unterschiedliche Substanzen, darunter höhere Alkohole, Ester, Aldehyde, Ketone, Lactone, Säuren usw., deren Gesamtmenge nur etwa 0,5 bis 1 Promill des Weinvolumens beträgt und die zum Teil sehr leicht flüchtig sind, wobei ihre Siedepunkte teilweise über und teilweise unter dem Siedepunkt des Ethanols liegen. Auch in ihrem Extraktionsverhalten gegenüber Kohlendioxid überschneiden sie sich zum wesentlichen Teil mit den entsprechenden Eigenschaften des Ethanols. Eine gewisse Selektivität der Extraktion hat man jedoch durch die Extraktionsbedingungen in der Hand. Hierzu gehören nicht nur die Druck- und Temperaturbedingungen sondern auch das Mengenverhältnis von Extraktmittel zu Getränk. So läßt es sich zwar erreichen, daß sich in einer ersten Extraktionsstufe bevorzugt ein Teil der Aromastoffe extrahieren läßt, je vollständiger man jedoch die Aromastoffe mit dem Extrakt erfassen will, um so mehr Ethanol wird mit extrahiert, was dazu führt, daß bei einer Rückmischung des Aromaextraktes mit dem Restgetränk der Alkoholgehalt nicht unter bestimmte Restgehalte abgesenkt werden kann. Begrenzt man dageben bei der ersten Aromaextraktionsstufe die extrahierte Alkoholmenge, so erfaßt man die Aroma- und Bukettstoffe keineswegs vollständig, weswegen ein erheblicher Anteil noch in den zweiten Extrakt geht, der allein der Alkoholreduzierung dienen soll.

Eine gewissermaßen selektivere Trennung läßt sich durch aufwendige Destillationsverfahren erreichen. Ein verhältnismäßig aufwendiges Verfahren dieser Art ist bereits in der DE-PS 377 406 beschrieben. Die Destillationsverfahren bergen die Gefahr, daß durch die notwendige Wärmeeinwirkung auf das Ausgangsgetränk dieses in seinem Charakter geschädigt wird. Außerdem ist es mit einem hohen Aufwand verbunden, die leichter als Ethanol siedenden Bukettstoffe getrennt zu erfassen und zu erhalten. In der Verfahrensliteratur über die Herstellung alkoholreduzierter Getränke ist man offenbar unterschiedlicher Auffassung darüber, ob nun vornehmlich die tiefer als Ethanol siedenden oder höher als Ethanol siedenden Geschmacks- und Aromastoffe für den Charakter des Getränkes verantwortlich sind, soll ein Getränk aber abgesehen von der Reduzierung bzw. Entfernung seines Alkoholgehaltes dem Ausgangsgetränk identisch entsprechen, so müssen beide Fraktionen möglichst vollständig erfaßt werden.

Es sind auch schon kombinierte mehrstufige Verfahren vorgeschlagen worden. So beschreibt die WO-OS 82/02405 ein Verfahren zur Herstellung von Getränken mit niedrigem Alkoholgehalt, bei dem zuerst die Bestandteile hohen Molekulargewichtes durch ein zweistufiges Membrantrennverfahren aus dem Ausgangsgetränk abgetrennt werden sollen, um dieses dann einer Vakuumdestillation zu unterwerfen, bei der das Ethanol entfernt wird. Die Membrantrennverfahren setzen die im Getränk enthaltenen Stoffe erheblichen mechanischen Beanspruchungen aus, die ihrerseits zu einer Schädigung führen können. Andererseits sind es gerade die bei höherer Temperatur siedenden Aromastoffe, die gegenüber einer Destillation verhältnismäßig unempfindlich sind.

Schließlich ist in der AU-PS 489 834 ein Verfahren beschrieben, bei dem einem Rohwein durch Extraktion mittels flüssigen Kohlendioxids Aromastoffe entzogen werden sollen, bevor dieser Wein dann in die Brandweindestillation zum Abdestillieren des Alkoholes gelangt. Sinn dieses Verfahrens ist, zumindest ein Teil der wertvollen Aromastoffe aus dem Ausgangswein zu entfernen, der nach dem Abdestillieren des Alkohols dann ohnehin als Abfallprodukt verworfen wird. Diese Aromastoffe sollen dann eventuell anderem Trinkwein zur Aromaverstärkung zugesetzt werden. Bei diesem Verfahren kommt es weder darauf an, die Aromastoffe dem Wein vorübergehend möglichst vollständig zu entziehen, noch soll durch die anschließende Destillation ein alkoholfreies Weingetränk erzeugt werden, weswegen die hierfür erforderlichen Gesichtspunkte bei dem vorbeschriebenen Verfahren vollständig außer acht bleiben.

Der Erfindung liegt die Aufgabe zugrunde, ein Verfahren der eingangs erwähnten Art zum Herstellen von alkoholreduzierten bzw. alkoholfreien Getränken derart zu verbessern, daß bei nicht zu aufwendiger Verfahrensführung einerseits das Bukett und die übrigen Geschmacks- und Aromastoffe des Ausgangsgetränkes praktisch vollständig erhalten bleiben, andererseits aber die Herstellung eines entalkoholisierten Weingetränkes möglich ist, dessen Ethanolgehalt unter 0,5 Vol.-% gebracht werden kann.

Diese Aufgabe wird erfindungsgemäß durch ein Verfahren gelöst, wie es durch den kennzeichnenden Teil des Patentanspruches 1 bestimmt ist.

Es hat sich nämlich gezeigt, daß sich mit einer nicht zu intensiven Hochdruckextraktion mit Kohlendioxid bevorzugt die Bukettstoffe aus dem Ausgangswein abtrennen lassen, die bei anderen Trennverfahren Gefahr laufen, geschädigt zu werden oder verloren zu gehen. Die Extraktionsfähigkeit mittels Kohlendioxid der betroffenen Stoffe muß dabei nicht notwendigerweise mit der Verteilung ihrer Siedepunkte übereinstimmen, spätere sensorische Überprüfungen haben aber ergeben, daß durch eine begrenzte Extraktion mittels Kohlendioxid die Bukettstoffe bevorzugt erfaßt werden. Die Extraktion wird dabei vorzugsweise so geführt, daß die Extraktmenge nur zwischen 0,1 und maximal 0,6 Vol.-% des Ausgangsgetränkes beträgt, wobei der Ethanolgehalt dieses Extraktes unter 80 Vol.-% liegen soll. Bei Durchführung dieses Verfahrensschrittes und Einhaltung der angegebenen Mengenverhältnisse bleiben die leicht und auch die schwerer flüchtigen Aromastoffe nicht nur während des Verfahrensablaufes unter $CO_2$-Schutz, sondern verbleiben anschließend im bevorrateten Extrakt unter Alkoholschutz. Der im Volumen steuerbare Alkoholanteil des Extraktes beläßt die Aromastoffe in ihrem natürlichen Medium und gewährleistet, daß z.B. wasserunlösliche Fraktionen nicht kondensieren und somit für das Endprodukt voll erhalten bleiben.

Bei der Extraktion wird vorzugsweise im überkritischen Bereich des Extraktionsgases gearbeitet, und zwar bei Temperaturen zwischen 35 und 45°C und Drücken zwischen 75 und 200 bar. Für die Extraktfraktion ist auch das Mengenverhältnis zwischen Ausgangsgetränk und Extraktmittel von Einfluß. Bevorzugt werden mit einem Gewichtsteil Kohlendioxid 1,5 bis 3 Gewichtsteile Ausgangsgetränk extrahiert.

Um die extrahierte Alkoholmenge in Grenzen zu halten, wird die Extraktion jedoch nicht soweit getrieben, daß auch die schwerer flüchtigen und bei höheren Temperaturen als Ethanol siedenden Aromabestandteile möglichst vollständig dem Getränk entzogen werden. Diese auch Temperatureinflüssen gegenüber etwas weniger empfindliche Aromafraktion wird erfindungsgemäß erst im nachfolgenden Destillationsschritt möglichst vollständig erfaßt. Infolge der vorgeschalteten Extraktionsstufe kann jedoch in der Destillation auf die Abtrennung von leichter als Ethanol siedenden Bestandteilen verzichtet werden, weswegen die Ethanolfraktion als Kopfprodukt der Rektifizierkolonne nicht mehr aufgeteilt zu werden braucht.

Die Destillation wird vorzugsweise in einer kontinuierlich arbeitenden Rektifikationskolonne vorgenommen. Dabei wird das extrahierte Restgetränk etwa im unteren Drittel der Kolonne zugegeben, das entalkoholisierte Restgetränk kontinuierlich als Sumpfprodukt entnommen, die Ethanolfraktion am Kopf der Kolonne und die Zwischenfraktion noch im Getränk verbliebene höher siedende Aromastoffe etwa in der Mitte der Kolonne entnommen.

Die Vakuumdestillation findet bevorzugt bei Drucken von weniger als 0,1 bar statt. Dabei sollte auch bei der Destillation die höchste vorkommende Temperatur im beheizten Sumpf der Kolonne zwischen 35 bis 40°C liegen, d.h. 45°C auch möglichst nicht überschreiten, um das Grundgetränk nicht zu schädigen. Auf diese Weise läßt sich in beiden Verfahrensstufen mit etwa den gleichen Maximaltemperaturen arbeiten.

Ein besonderes Zusatzmerkmal der Erfindung liegt in der gesteuerten Entnahme der Zwischenfraktion an der Kolonne. Die Entnahmemenge soll so geregelt werden, daß ein stetiges Temperaturprofil entlang der Kolonne erhalten bleibt.

Nach Inbetriebnahme der Kolonne entsteht über der Einspeisestelle für das aus der Extraktion kommende Restgetränk eine Fraktion mit maximalem Anteil an noch im Getränk enthaltenen Aromastoffen. Als verhaltensmäßig repräsentative Komponenten dieser Fraktion können die Amylalkohole genannt werden, obwohl sie nur einen Bestandteil der Gesamtfraktion an schwerer siedenden Aromastoffen darstellen. Nach Inbetriebnahme der Rektifizierkolonne reichert sich, wie gesagt, die schwerer siedende Aromafraktion mit zunehmender Destillationsdauer oberhalb der Einspeisestelle an. Übersteigt der Gehalt dieser Fraktion einen kritischen Wert, der je nach Weinsorte und Arbeitsbedingungen bei 30 bis 60 Vol.-% liegen kann, verursacht sie eine Schwankung im Temperaturprofil der Rektifizierkolonne, die dadurch bewirkt wird, daß diese Komponenten mit Wasser heterogene Azeotrope bilden, die unter dem Siedepunkt der jeweiligen Reinkomponenten liegen. Durch die zunehmende Anreicherung der Aromakomponenten verändert sich auch die Zusammensetzung des zurücklaufenden Gemisches in der Kolonne, wodurch im Bereich der Einspeisestelle zwei nicht mischbare Flüssigphasen entstehen können, die dann entsprechend dem jeweiligen Siedeverhalten mit Wasser als heterogenes Azeotrop verdampfen. Ab diesem Zeitpunkt kann und soll über der Einspeisestelle des Getränkes die schwerer siedende Aromafraktion kontinuierlich entnommen werden, wobei die Menge so zu begrenzen ist, daß das erwähnte stetige Temperaturprofil entlang der Rektifizierkolonne erhalten bleibt. Diese Lehre weicht deutlich von derjenigen nach der DE-PS 377 406 ab, nach der die schwerer siedenden Aromastoffe innerhalb der Kolonne in den Sumpf zurücklaufen sollen.

Zur Herstellung des angestrebten alkoholfreien Getränkes werden schließlich dem aus der Destillierkolonne abgezogenen Sumpfprodukt der aromahaltige Extrakt aus der Extraktionsstufe und die Zwischenfraktion aus der Destillationsstufe wieder beigemischt. Etwaige Volumenverluste, die bei der Verfahrensdurchführung auftreten, können durch entsprechende Zugabe von entmineralisiertem Wasser wieder ausgeglichen werden, um die Konzentration des Ausgangsgetränkes wieder herzustellen. Auch kann das so erhaltene alkoholfreie Getränk noch in der Getränketechnik üblichen Nachbehandlungen unterzogen werden. So kann beispielsweise bei der Herstellung von alkoholfreiem Wein dessen Geschmacksrichtung noch durch Zugabe sog. Süßreserve abgestimmt werden. Auch sind gegebenenfalls die erforderlichen Haltbarmachungsmaßnahmen durchzuführen.

Sollte ausnahmsweise zum Erreichen eines äußerst geringen Ethanolgehaltes im fertigen Getränk und abhängig von Art und Charakter des Ausgangsgetränkes die mit dem Aromaextrakt aus der Extraktionsstufe mitgenommene Ethanolmenge zu groß sein, um nach Zumischen des Extraktes zum entalkoholisierten Restwein den geforderten Mindestalkoholgehalt einzuhalten, so kann der Aromaextrakt selbst einer weiteren Extraktion unterzogen werden, um eine im wesentlichen nur Ethanol enthaltende Fraktion aus dem Extrakt abzutrennen. Diese Ethanolfraktion, die auch noch einen geringen Anteil an Aromastoffen enthalten kann, wird dann zweckmäßigerweise dem Restwein vor der Destillation wieder zugegeben, um dort diese restlichen Aromastoffe noch wiederzugewinnen.

Im folgenden wird das erfindungsgemäße Verfahren anhand des als Zeichnung beigefügten Verfahrensschemas noch zusätzlich erläutert.

Das zu behandelnde Ausgangsgetränk, z.B. Wein, wird aus einem Vorratsgefäß (1) mit Hilfe einer entsprechenden Pumpe (2), beispielsweise einer Membranpumpe, kontinuierlich auf einen Druck zwischen 75 und 200 bar gebracht und nach Durchlaufen eines Wärmetauschers (3), in dem das Getränk auf eine Temperatur zwischen 35 und 45°C angewärmt wird, in den oberen Teil eines Reaktors (4) eingeleitet. Überkritisches fluides Kohlendioxid mit entsprechender Temperatur und unter entsprechendem Druck wird im Gegenstrom durch den Reaktor (4) geführt. Das Kohlendioxid wird einem Vorratsbehälter (5) entnommen und mittels einer Pumpe (6) auf den erforderlichen Druck gebracht und zuerst durch einen Wärmetauscher (7), in dem es auf eine Temperatur zwischen 35 und 45°C aufgewärmt wird, und dann dosiert in das untere Ende des Reaktors (4) gepumpt.

Als vorteilhaft hat sich ein Reaktor erwiesen, der aus einer schlanken Säule besteht, an die sich oben und unten sog. Settler anschließen, deren Durchmesser im Verhältnis von etwa 4:1 bis 8:1 zum Durchmesser der eigentlichen Reaktorsäule stehen. Hierdurch wird eine bessere Phasentrennung von Kohlendioxid und Wein erreicht. Um eine intensivere Durchmischung und somit einen beschleunigten Stoffaustausch innerhalb der Reaktorsäule zu erreichen, enthält diese zweckmäßigerweise mechanische oder statische Mischer oder auch Füllkörper. Der Reaktor sollte vorteilhafterweise gegen die Umgebungstemperatur isoliert sein oder sogar über eine eigene Temperiereinrichtung verfügen.

Während der Wein von dem überkritischen, spezifisch leichteren Kohlendioxid von unten durchströmt wird, nimmt das $CO_2$ sowohl die leicht als auch zumindest einen Teil der schwerer flüchtigen Aromastoffe und einen geringen Teil des Ethanols auf. Das mit diesen Stoffen beladene $CO_2$ verläßt den Reaktor (4) an seinem oberen Ende und wird über einen Wärmetauscher (8), in dem eine Herabkühlung auf -5 bis -10°C erfolgt, in einen Separator (9) geleitet, in dem das Gemisch auf 15 bis 20 bar entspannt wird. Bei der damit verbundenen Änderung seines Aggregatzustandes gibt das Kohlendioxid die mitgeführten Stoffe frei, die sich als flüssiges alkoholisches Aromakonzentrat am Boden des Behälters (9) niederschlagen und von dort in ein Sammelgefäß (10) gelangen. Von dem ursprünglichen Weinvolumen werden ca. 2 Promill als Extrakt mit 65 Vol.-% Gesamtalkohol gewonnen. Das abgekühlte, teilweise entspannte $CO_2$-Gas wird über einen Verdichter (11) in den Vorratsbehälter (5) und somit in den Extraktionskreislauf zurückgeführt.

Der von dem Aromaextrakt befreite Restwein verläßt den Reaktor (4) an dessen unterem Ende und wird in einem Behälter (12) entspannt und entgast. Von hier aus wird der Restwein durch den von einer Pumpe (13) am Kopf der nachfolgenden Reaktifizierkolonne erzeugten Unterdruck zuerst durch einen Wärmetauscher (14), in dem der Restwein auf eine Temperatur von 22 bis 25°C gebracht wird, in eine Vakuumdestillationskolonne (15) gezogen, die vorteilhafterweise als Alkoholrektifizierkolonne ausgelegt ist. In dieser kontinuierlich arbeitenden Rektifizierkolonne wird der Restwein etwa im unteren Drittel bei (16) in die Rektifizierkolonne (15) eingespeist. In der Rektifizierkolonne (15) wird der Restwein in drei Fraktionen aufgeteilt, und zwar in eine Ethanolfraktion, die bei (17) am Kopf der Kolonne entnommen wird, eine Aromazwischenfraktion, die bei (18) etwa in der Mitte der Kolonne entnommen wird, und ein sich im beheizten Sumpf (19) der Kolonne ansammelndes, entalkoholisiertes Sumpfprodukt, welches mittels einer Pumpe (20) über den Wärmetauscher (3) einem Sammelbehälter (21) zugeführt wird. Im Wärmetauscher (3) gibt das Sumpfprodukt einen Teil seiner Wärme an den der Extraktionsstufe des Prozesses zugeführten Ausgangswein ab. Die bei (18) aus der Rektifizierkolonne (15) entnommene Aromazwischenfraktion wird in einem Kondensator (22) kondensiert und einem Sammelgefäß (23) zugeführt.

Zum Erzeugen des fertigen, entalkoholisierten Getränkes werden das Sumpfprodukt aus dem Behälter (21), der Aromaextrakt aus dem Behälter (10) und die Aromazwischenfraktion aus dem Behälter (23) wieder zusammengemischt.

Für den Betrieb der Rektifikationskolonne (15) kann es vorteilhaft sein, einen wesentlichen Anteil der bei (17) entnommenen und nach Kondensation in einem Behälter (24) gesammelten Ethanolfraktion als sog. externen Rücklauf wieder in die Kolonne einzuführen. Das Rücklaufverhältnis kann beispielsweise 5:1 sein.

Für die Rektifikationskolonne gilt, daß sie zweckmäßigerweise aus Edelstahl und/oder Glas gefertigt ist, um keine schädlichen Schwermetallionen in das Produkt gelangen zu lassen. Die erforderlichen Kolonneneinbauten sollten so gewählt werden, daß sie eine möglichst geringen Druckverlust bewirken. Bei entsprechend ausgelegter Kolonne läßt sich ein Kopfprodukt mit mehr als 95 Vol.-% Ethanol erreichen, sowie ein Sumpfprodukt mit weniger als 0,1 Vol.-% Ethanol. Die Menge an Kopfprodukt beträgt etwa 12 bis 15 Vol.-% vom eingesetzten Ausgangswein.

Ausführungsbeispiel

Eine für die Extraktion bestimmte Reaktorsäule der vorstehend beschriebenen Art, die mit Raschig-Ringen von 10x10 mm gefüllt ist, wird mit temperiertem Kohlendioxid auf einen Druck von 90 bar vorgespannt. In das obere Ende des Reaktors wird mittels einer Membrandosierpumpe auf 35°C temperierter Wein, beispielsweise der Sorten Müller-Thurgau, Riesling, Morio-Muskat, Spätburgunder, Merlot oder Apfelwein oder Fruchtwein in einer Menge von 10 bis 12 Liter pro Stunde in die Reaktorsäule eindosiert. Im Gegenstrom wird mit einer zweiten Membrandosierpumpe auf 35°C temperiertes, auf einen überkritischen Druck von 90 bar komprimiertes Kohlendioxid in einer Menge von etwa 6 kg/h in das untere Ende der Reaktorsäule eindosiert. Während das spezifisch leichtere Trägergas in der Reaktorsäule aufsteigt, nimmt es die das Aroma bildenden Stoffe des entgegengesetzt von oben nach unten fließenden spezifisch schwereren Weines auf. Ein intensiver Stoffaustausch wird durch die in der Reaktorsäule vorhandenen Raschig-Ringe erreicht. Die Produktströme verlassen an entgegengesetzten Enden über Drosselventile die Extraktionskolonne. Mit diesen Drosselventilen wird der Kolonneninnendruck auf ein Niveau von 90 bar eingeregelt.

Das mit dem Aromaextrakt beladene $CO_2$ wird in einem nach unten konisch zulaufenden Separationsbehälter auf 15 bis 20 bar entspannt und gibt dabei den Extrakt ab, der sich im Konus des Separators sammelt. Um den Extrakt gegen Verwirbelungen durch den Gasstrom abzuschirmen und zusätzliche Kondensationsfläche zu schaffen, ist der Separator etwa bis zur Hälfte mit Drahtwendeln von 5x5 mm gefüllt. Zur Vermeidung von Vereisungen empfiehlt es sich, das Gas und den Behälter auf ca. -5°C zu temperieren. Stündlich fallen etwa 25 ml Wasser klarer, stark aromatischer Extrakt mit 65 Vol.-% Gesamtalkoholgehalt an, der über ein Ventil in ein Sammelgefäß abgelassen wird. Das neutrale gasförmige $CO_2$ wird mit einem Membrankolbenverdichter abgesaugt bzw. auf den Druck des $CO_2$-Vorratsbehälters gebracht und in diesen zurückgefördert.

Der von dem größten Teil seiner Aromastoffe befreite Wein wird in einem von Einbauten freien Entgasungsbehälter entspannt. Das dabei freiwerdende $CO_2$, etwa 6 bis 7 Gew.-% der in den Reaktor eingespeisten Gasmenge kühlt dabei durch den Effekt der adiabatischen Dekompression den Wein auf 25 bis 28°C ab. Aus Kostengründen lohnt es sich nicht, diesen $CO_2$-Anteil in den Kreislauf zurückzuführen.

In dem nachfolgenden zweiten Verfahrensschritt wird aus dem Restwein mittels Vakuumdestillation der Alkohol abdestilliert. Außerdem wird eine geringe Fraktion an in der Extraktion nicht miterfaßten schwer flüchtigen Aromabestandteilen abgetrennt. In der Destillationskolonne wird mit einem Unterdruck von 40 mbar gearbeitet. Der extrahierte Restwein wird mit einer Temperatur von 25°C zwischen dem sog. Abtriebsteil der Kolonne und dem sog. Verstärkerteil der Kolonne etwa im unteren Drittel in diese Kolonne eingespeist. Als Kolonneneinbauten sind Glasringe einer Abmessung von 5×5 mm vorgesehen. Durch Beheizung wird die Sumpftemperatur der Kolonne zwischen 35 und 40°C gehalten. Die Kopftemperatur beträgt 14 bis 16°C. Die Aromazwischenfraktion wird mit einer Temperatur zwischen 26 und 30°C etwa in der Mitte der Kolonne, und zwar oberhalb des Restweinzulaufes entnommen. Das kondensierte Kopfprodukt weist einen Ethanolgehalt von 96 Vol.-% auf. Der Ethanolgehalt im Sumpfprodukt beträgt weniger als 0,1 Vol.-%.

Der Volumenstrom der als Seitenstrom abgenommenen Aromazwischenfraktion richtet sich nach dem Restanteil von Aromastoffen nach der Extraktion und darf nur so groß sein, daß das stetige Temperaturprofil der Kolonne im kontinuierlichen Betrieb nicht gestört wird.

Aus Sumpfprodukt, Extrakt und Aromazwischenfraktion wird unter Auffüllen mit 15 Vol.-% destillierten Wassers ein alkoholfreier Wein hergestellt, der mit Ausnahme des Ethanols vollständig dem Ausgangswein entspricht, und dessen sensorische Prüfung zeigt, daß er abgesehen vom fehlenden Ethanolgehalt mit dem Ausgangswein gut übereinstimmt.

Das beschriebene Verfahren gewährleistet, daß grundsätzlich die Produkte Aroma und alkoholfreier Rückstand, die schließlich wieder zu einem Endprodukt zusammengemischt werden, während des Verfahrensablaufes nie höheren Temperaturen ausgesetzt sind, als sie naturgemäß maximal auch am Pflanzenstandort auftreten. Es läßt sich mit dem Verfahren ein hochwertiges alkoholfreies Produkt herstellen, das mit Ausnahme der alkoholtypischen Eigenschaften in seinen Geruchs- und Geschmackseigenschaften gut dem Ausgangsprodukt entspricht.

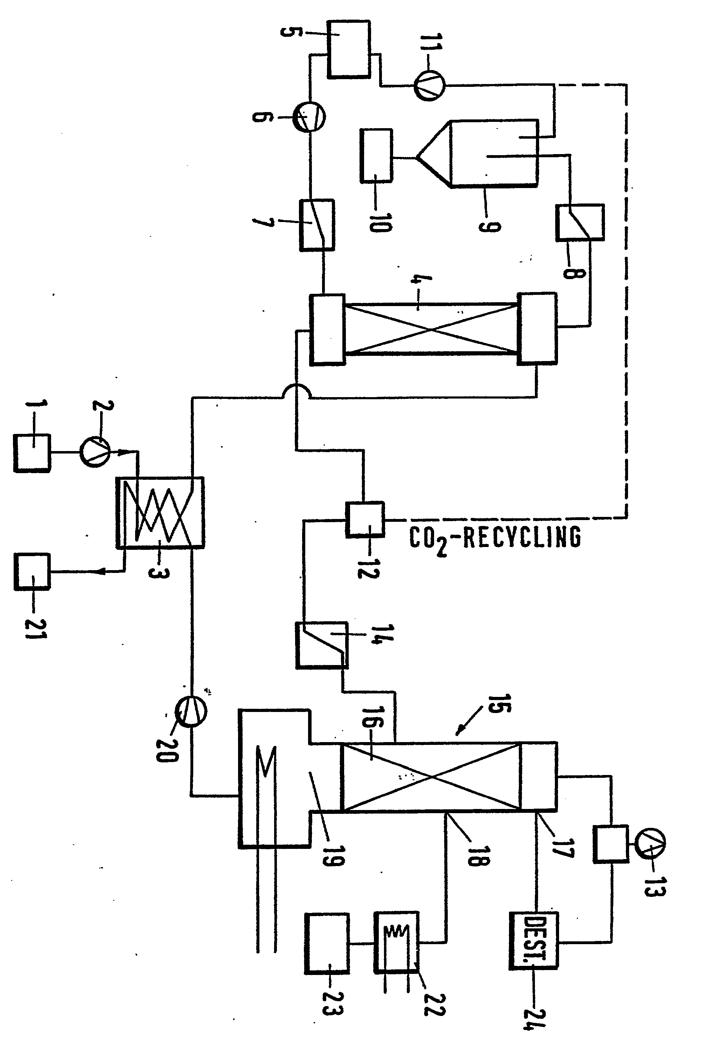

**Patentansprüche**

1. Verfahren zum Herstellen von alkoholreduzierten und/oder alkoholfreien Getränken aus durch natürliche alkoholische Vergärung von Früchten oder entsprechenden Pflanzenteilen erhaltenen Ausgangsgetränken, insbesondere zum Herstellen von alkoholreduziertem und/oder alkoholfreiem Wein, bei dem durch Hochdruckextraktion mit einem inerten Gas, insbesondere durch $CO_2$-Hochdruckextraktion dem Ausgangsgetränk ein an Aromastoffen reicher alkoholischer Extrakt entzogen, das Restgetränk in seinem Ethanolgehalt reduziert und dann der an Aromastoffen reiche alkoholische Extrakt dem alkoholreduzierten Restgetränk wieder zugegeben wird, dadurch gekennzeichnet, daß die Reduzierung des Ethanolgehaltes des Restgetränkes mittels Unterdruck-Destillation in einer Rektifizierkolonne erfolgt, bei der zwischen der Aufgabestelle des Restgetränkes aus der Extraktion und der Entnahmestelle der Ethanolfraktion am Kopf der Kolonne eine im wesentlichen aus gegenüber Ethanol schwerer siedenden (Aroma)-Stoffen bestehende Zwischenfraktion entnommen wird, die zusammen mit dem an Aromastoffen reichen alkoholischen Extrakt dem alkoholreduzierten Restgetränk wieder zugegeben wird.

2. Verfahren nach Anspruch 1, dadurch gekennzeichnet, daß die Extraktion mittels Kohlendioxid im überkritisch fluiden Zustand erfolgt.

3. Verfahren nach Anspruch 2, dadurch gekennzeichnet, daß die Extraktion bei Temperaturen zwischen 35 und 40°C und bei Drucken zwischen 75 und 200 bar erfolgt.

4. Verfahren nach einem der Ansprüche 1 bis 3, dadurch gekennzeichnet, daß das Mengenverhältnis in Gewichtsteilen zwischen Kohlendioxid und Ausgangsgetränk bei der Extraktion zwischen 1:1,5 und 1:3 beträgt.

5. Verfahren nach einem der Ansprüche 1 bis 4, dadurch gekennzeichnet, daß die Verfahrensbedingungen so geführt werden, daß die Extraktmenge zwischen 0,1 und 0,6 Vol.-% vom Ausgangsgetränk beträgt, und der Ethanolgehalt im Extrakt unter 80 Vol.-% liegt.

6. Verfahren nach einem der Ansprüche 1 bis 5, dadurch gekennzeichnet, daß die Extraktion im Gegenstrom in einer schlanken Reaktorsäule mit im Verhältnis von 4:1 bis 8:1 gegenüber dem Durchmesser des Reaktorteils der Säule erweiterten Kopf- und Fußteilen, sog. Settlern, erfolgt.

7. Verfahren nach einem der Ansprüche 1 bis 6, dadurch gekennzeichnet, daß die Destillation kontinuierlich erfolgt, wobei das aus der Extraktion erhaltene Restgetränk unterhalb der Mitte der Rektifizierkolonne aufgegeben, das ethanolreduzierte Restgetränk dem Sumpf der Kolonne, die Ethanolfraktion dem Kopf der Kolonne und die Zwischenfraktion im mittleren Bereich der Kolonne, oberhalb der Aufgabestelle für das Restgetränk entnommen wird.

8. Verfahren nach einem der Ansprüche 1 bis 7, dadurch gekennzeichnet, daß die Destillation bei einem Unterdruck von weniger als 0,1 bar erfolgt.

9. Verfahren nach Anspruch 8, dadurch gekennzeichnet, daß die Destillation bei einem Druck von etwa 40 mbar erfolgt und die Zulauftemperatur bei 22 bis 25°C und die Sumpftemperatur durch Beheizen bei 35 bis 40°C gehalten werden, wobei sich eine Kopftemperatur von 14 bis 16°C einstellt.

10. Verfahren nach Anspruch 9, dadurch gekennzeichnet, daß die Zwischenfraktion mit einer Temperatur von 26 bis 30°C entnommen wird.

11. Verfahren nach einem der Ansprüche 7 bis 10, dadurch gekennzeichnet, daß eine Kolonne mit einer entsprechenden Anzahl an theoretischen Böden verwendet und die Destillation so geführt wird, daß das Sumpfprodukt auf einen Ethanolgehalt von weniger als 0,2 Vol.-%, vorzugsweise von weniger als 0,1 Vol.-% gebracht wird.

12. Verfahren nach einem der Ansprüche 7 bis 11, dadurch gekennzeichnet, daß die Zwischenfraktion nach einer Einfahrzeit der Kolonne und Erreichen eines stationären Zustandes in einer solchen Menge abgezogen wird, daß ein stetiges Temperaturprofil der Kolonne eingehalten wird.

13. Verfahren nach einem der Ansprüche 1 bis 12, dadurch gekennzeichnet, daß der aus der Extraktionsstufe erhaltene Extrakt zur Reduzierung der in ihm enthaltenen Ethanolmenge einer weiteren Hochdruckextraktion zum Abtrennen einer Ethanolfraktion unterworfen wird.

14. Verfahren nach Anspruch 13, dadurch gekennzeichnet, daß diese Ethanolfraktion dem Restwein vor der Destillation wieder zugegeben wird.

**Claims**

1. Process for preparing alcohol-reduced and/or alcohol-free beverages from starting beverages obtained by natural alcoholic fermentation of fruits or corresponding plant parts, in particular for producing alcohol-reduced and/or alcohol-free wine, in which by high-pressure extraction with an inert gas, in particular by $CO_2$ high-pressure extraction, an alcoholic extract rich in aromatic substances is extracted from the starting beverage, the residual beverage reduced in its ethanol content and then the alcoholic extract rich in aromatic substances again added to the alcohol-reduced residual beverage, characterized in that the reduction of the ethanol content of the residual beverage is effected by means of distillation under reduced pressure in a rectifying column in which between the charging point of the residual beverage from the extraction and the withdrawal point of the ethanol fraction at the head of the column an intermediate fraction is withdrawn which consists substantially of higherboiling (aromatic) substances compared with ethanol and which together with the alcohol extract rich in aromatic substances is again added to the alcoholreduced residual beverage.

2. Process according to claim 1, characterized in that the extraction is effected by means of carbon dioxide in the supercritical fluid state.

3. Process according to claim 2, characterized in that the extraction is effected at temperatures between 35 and 40°C and at pressures between 75 and 200 bar.

4. Process according to claim 1, characterized in that the quantity ration in parts by weight between carbon dioxide and starting beverage in the extraction is between 1:1.5 and 1:3.

5. Process according to claim 1 characterized in that the process conditions are maintained such that the extract amount is between 0.1 and 0.6 vol.% of the starting beverage and the ethanol content in the extract is less than 80 vol.%.

6. Process according to claim 1, characterized in that the extraction is effected in counterflow in a slim reactor column with head and base portions, socalled settlers, widened in the ratio of 4:1 to 8:1 compared with the diameter of the reactor part of the column.

7. Process according to claim 1, characterized in that the distillation takes place continuously, the residual beverage obtained from the extraction being introduced beneath the centre of the rectifying column and the ethanol-reduced residual beverage being withdrawn from the bottom of the column, the ethanol fraction from the head of the column and the intermediate fraction in the centre region of the column above the introduction point for the residual beverage.

8. Process according to claim 1, characterized in that the distillation takes place at a reduced pressure of less than 0.1 bar.

9. Process according to claim 8, characterized in that the distillation takes place at a pressure of about 40 mbar and the feed temperature is maintained at 22 to 25°C and the column bottom temperature is maintained by heating at 35 to 45°C, a head temperature of 14 to 16°C thus arising.

10. Process according to claim 9, characterized in that the intermediate fraction is extracted at a temperature of 26 to 30°C.

11. Process according to claim 1, characterized in that the column is used with a corresponding number of theoretical trays and the distillation is carried out such that the bottom product is brought to an ethanol content of less than 0.2 vol.%, preferably of less than 0.1 vol.%.

12. Process according to claim 1, characterized in that the intermediate fraction after a start-up time of the column and reaching a stationary state is withdrawn in an amount such that a constant temperature profile is maintained in the column.

13. Process according to claim 1, characterized in that to reduce the ethanol amount contained therein the extract extracted from the extraction stage is subjected to a further high-pressure extraction for separating an ethanol fraction.

14. Process according to claim 13, characterized in that said ethanol fraction is added again to the residual wine prior to the distillation.

**Revendications**

1. Procédé de préparation de boissons à taux d'alcool réduit et/ou ne contenant pas d'alcool à partir de boissons de départ obtenues par fermentation alcoolique naturelle de fruits ou de parties de plantes appropriées, en particulier de préparation de vin à taux d'alcool réduit et/ou ne contenant pas d'alcool, selon lequel on retire par extraction sous pression élevée au moyen d'un gaz inerte, en particulier par extraction sous pression élevée de $CO_2$, un extrait alcoolique riche en substances aromatiques à partir de la boisson de départ, on réduit la teneur en éthanol dans la boisson restante puis on rajoute l'extrait alcoolique riche en substances aromatiques à la boisson restante à taux d'alcool réduit, caractérisé en ce que la réduction de la teneur en éthanol de la boisson restante est effectuée au moyen d'une distillation sous pression réduite dans une colonne de rectification dans laquelle, entre l'endroit d'alimentation en boisson restante provenant de l'extraction et l'endroit de prélèvement de la fraction d'éthanol en tête de la colonne, on prélève une fraction intermédiaire constituée essentiellement de substances (aromatiques) bouillant plus difficilement que l'éthanol, fraction intermédiaire qui est rajoutée, ensemble avec l'extrait alcoolique riche en substances aromatiques, à la boisson restante à taux réduit en alcool.

2. Procédé selon la revendication 1, caractérisé en ce que l'extraction est effectuée au moyen de dioxyde de carbone à l'état supercritiquement fluide.

3. Procédé selon la revendication 2, caractérisé en ce que l'extraction est effectuée à des températures entre 35 et 40°C et sous des pressions entre 75 et 200 bars.

4. Procédé selon l'une des revendications 1 à 3, caractérisé en ce que la proportion quantitative, exprimée en parties en poids, entre le dioxyde de carbone et la boisson de départ est comprise entre 1:1,5 et 1:3 lors de l'extraction.

5. Procédé selon l'une des revendications 1 à 4, caractérisé en ce que les conditions de mise en œuvre du procédé sont telles que la quantité d'extrait se situe entre 0,1 et 0,6% en volume de la boisson de départ, et en ce que la teneur en éthanol dans l'extrait est inférieure à 80% en volume.

6. Procédé selon l'une des revendications 1 à 5, caractérisé en ce que l'extraction est effectuée à contre-courant dans une colonne de réacteur allongée avec des parties de tête et de pied, appelées décanteurs, évasées par rapport au diamètre de la partie de réacteur de la colonne dans le rapport de 4:1 à 8:1.

7. Procédé selon l'une des revendications 1 à 6, caractérisé en ce que la distillation est effectuée en continu, la boisson restante provenant de l'extraction étant introduite au-dessous du milieu de la colonne de rectification, la boisson restante à teneur réduite en éthanol étant prélevée de la partie basse de la colonne, la fraction d'éthanol étant prélevée de la tête de la colonne et la fraction intermédiaire étant prélevée à partir du domaine moyen de la colonne, au-dessus de l'endroit d'alimentation pour la boisson restante.

8. Procédé selon l'une des revendications 1 à 7, caractérisé en ce que la distillation a lieu sous une dépression inférieure à 0,1 bar.

9. Procédé selon la revendication 8, caractérisé en ce que la distillation est effectuée sous une pression d'environ 40 mbars et en ce que la température d'alimentation est maintenue à 22 jusqu'à 25°C et la température du bas de colonne est maintenue par chauffage à 35 jusqu'à 40°C, ce grâce à quoi une température de tête de 14 à 16°C s'établit.

10. Procédé selon la revendication 9, caractérisé en ce que la fraction intermédiaire est prélevée à une température de 26 à 30°C.

11. Procédé selon l'une des revendications 7 à 10, caractérisé en ce que l'on utilise une colonne avec un nombre de plateaux théoriques adapté et en ce qu'on effectue la distillation de sorte que le produit de bas de colonne soit amené à une teneur en éthanol inférieure à 0,2% en volume, de préférence inférieure à 0,1% en volume.

12. Procédé selon l'une des revendications 7 à 11, caractérisé en ce que la fraction intermédiaire, après un temps de positionnement ou d'équilibrage de la colonne et après établissement d'un état stationnaire, est extraite en une quantité telle qu'un profil des températures constant de la colonne soit maintenu.

13. Procédé selon l'une des revendications 1 à 12, caractérisé en ce que l'extrait obtenu à partir de l'étape d'extraction, pour réduire la quantité d'éthanol qui y est contenue, est soumis à une autre extraction sous pression élevée pour séparer une fraction d'éthanol.

14. Procédé selon la revendication 13, caractérisé en ce que cette fraction d'éthanol est rajoutée au vin restant avant la distillation.

CO$_2$-RECYCLING